Europäisches Patentamt

(19) European Patent Office

Office européen des brevets

(11) Publication number: **0 273 779**
**A1**

(12) **EUROPEAN PATENT APPLICATION**

(21) Application number: **87400001.1**

(22) Date of filing: **02.01.87**

(51) Int. Cl.⁴: **C 09 K 5/06**

(43) Date of publication of application:
**06.07.88  Bulletin  88/27**

(84) Designated Contracting States: **DE FR GB**

(71) Applicant: **SUMITOMO CHEMICAL COMPANY, LIMITED**
**15 Kitahama 5-chome Higashi-ku**
**Osaka-shi Osaka 541  (JP)**

(72) Inventor: **Saita, Kenji**
**2-10-5-102, Sonehigashimachi**
**Toyonaka-shi Osaka 561  (JP)**

**Fujioka, Shozo**
**1062, Houjo**
**Tooyo-shi Ehime 799-13  (JP)**

(74) Representative: **Bourgognon, Jean-Marie et al**
**Cabinet Flechner 22, Avenue de Friedland**
**F-75008 Paris  (FR)**

(54) **Process for producting heat storage materials.**

(57) A heat storage material which shows no reduction of performances even when subjected to repetition of cycles of temperature history can be produced by polymerization of a polyfunctional monomer and at least one monomer selected from an unsaturated carboxylic acid, an organic unsaturated sulfonic acid and a salt thereof in the presence of sodium sulfate or a eutectic salt thereof, water and a polymerization initiator. Thus obtained heat storage material comprises a composition of a hydrate of sodium sulfate or a eutectic salt thereof and a crosslinked polymer. A redox type polymerization initiator is preferred as the polymerization initiator.

EP 0 273 779 A1

Bundesdruckerei Berlin

## Description

PROCESS FOR PRODUCING STORAGE MATERIALS

## BACKGROUND OF THE INVENTION

This invention relates to a process for producing a heat storage material used for heating buildings and the like.

Heat storage materials are required to fulfill the conditions that they must have a large heat storage capacity, they work at a desired temperature level, they are stable for a long period, and they are cheap, non-toxic and non-corrosive. Among the materials which fulfill these conditions, phase changeable hydrous salt have been extensively studied and representative thereof is sodium sulfate decahydrate.

Because sodium sulfate decahydrate has a melting point of 32°C and a latent heat of 60 cal/g, many attempts have been made to utilize it as a heat storage material since 1952, when sodium tetraborate decahydrate ($Na_2B_4O_7 \bullet 10H_2O$) was found to be effective as a supercooling inhibitor used in combination with the sodium sulfate decahydrate.

The problem encountered in investigation for practical use is that sodium sulfate decahydrate shows inharmonious melting. That is, when it is melted, sodium sulfate anhydrous salt is produced and settles down to the bottom of liquid. Upon cooling, the surface layer of the settled anhydrous salt re-hydrates to decahydrate, but the inner portion remains as an anhydrous salt. The remaining anhydrous salt does not take part in phase changing and this brings about reduction of heat storage capacity. In order to solve this problem, there have been studied various methods to disperse and retain the anhydrous salt in the liquid without settling it to the bottom. These methods comprise preventing the anhydrous salt from settling down by thickening the liquid with organic or inorganic additives. For example, as the additives, there have been proposed natural organic polymers such as carboxymethyl cellulose, starch, etc. (cf., U.S.PATENT No. 3,986,969). However, natural products decompose with ease and so there is the problem in use for a long time. Furthermore, there have been proposed inorganic products such as fumed silica (cf.,Japanese Patent Unexamined Publication (Kohyo) No.501,180/80) and attapulgite-type clay (cf., Japanese Patent Unexamined Publication (Kokai) No.34,687/78). However, viscosity thereof gradually decreases due to the cycle of melting and solidification and this results in insufficient prevention of settling down of sodium sulfate anhydrous salt. As synthetic organic polymers, thickening by water soluble polymers such as sodium polyacrylate, etc. has been proposed, but they have fluidity and flow at the time of growing and disappearing of hydrous salt crystal during the cycle of melting and solidification to coarsen the crystal grains and eventually to result in settling down of anhydrous salt. The settling down of anhydrous salt in this case includes not only to the bottom of liquid, but in fine parts (called "water pool" hereinafter) composed of only aqueous phase in network structure formed in the liquid by the water soluble polymers. The water pool is gradually enlarged due to the growth and disappearance of crystals during the cycle of melting and solidification.

Moreover, use of crosslinked polymers have been proposed in order to solve the above problems encountered when water soluble polymers are used. For example, there have been proposed the following methods: one which comprises allowing a polyvalent metal ion to act on a water soluble polymer having carboxyl group or sulfonic acid group in a liquid containing sodium sulfate or the like to produce an ionically crosslinked polymer (cf., Japanese Patent Examined Publication (Kokoku) No.30873/82); one which comprises reacting a water soluble polymer having a crosslinkable functional group (e.g., polyacrylamide) with other crosslinking agent (e.g, aldehyde) in a liquid containing sodium sulfate or the like to produce a covalently crosslinked polymer (cf., Japanese Patent Examine Publication (Kokoku) No.48027/82); and one which comprises adding a water-swelling crosslinked polymer produced outside the system to a melt of hydrous salt (cf., Japanese Patent Unexamined Publication (Kokai) Nos.132075/83 and 102977/84). These methods have a considerable effect of preventing the anhydrous salt from settling down during the cycle of melting and solidification, causing relatively small reduction of heat-storing capacity.

According to the above methods, a mixture of a water soluble and crosslinkable polymer and sodium sulfate or the like is mixed with water or a water soluble and crosslinkable polymer or a water-swelling crosslinked polymer is dissolved or dispersed in a melt of hydrous salt of sodium sulfate, etc. In this case, if a large amount of the polymer is allowed to contact with water at one time, only the surface of the polymer is hydrated to become water impermeably, namely, become undissolved lump. Therefore, the polymer must be gradually contacted with water under vigorous stirring. For this reason, the mixing operation is complicated and besides a special device is required. Thus, these methods are industrially disadvantageous. Furthermore, the product obtained by the above mixing operation is highly viscous liquid or a jellified solid and in order to divide it to small portions and fill them in a container, pressure must be applied. Thus, a special filling machine is necessary and operations for filling and washing are complicated.

## SUMMARY OF THE INVENTION

The object of this invention is to provide a process for producing a heat storage material which employs sodium sulfate decahydrate as a chief material and which is free from reduction in performance even after repeated cycles of melting and solidification and is further free from the above-mentioned defects.

The above object is accomplished by a process for producing a heat storage material comprising a composition of a hydrate of sodium sulfate or a eutectic salt thereof and a crosslinked polymer, characterized in that at least one monomer selected from an unsaturated carboxylic acid, an organic unsaturated sulfonic acid and a salt thereof and a polyfunctional monomer are polymerized in the presence of sodium sulfate or a eutectic salt thereof, water and a polymerization initiator.

## DESCRIPTION OF THE INVENTION

Sodium sulfate or eutectic salt thereof, and water constitute a phase changeable heat storage medium. As substances to form a eutectic salt with sodium sulfate, there may be used known substances such as sodium chloride, potassium chloride, sodium nitrate, potassium nitrate, magnesium sulfate, urea, etc. Proportion of these substances is, e.g., 0-2 moles for 1 mole of sodium sulfate. Use of the eutectic salt has the effect of lowering the melting point as compared with use of sodium sulfate alone.

Amount of water including water of crystallization is about 10-30 moles for 1 mole of sodium sulfate. The 10 moles is a theoretical amount for sodium sulfate decahydrate. When the amount of water is more than 30 moles, this is excessive and efficiency of the heat storage medium is reduced.

As examples of the unsaturated carboxylic acid, mention may be made of acrylic acid, methacrylic acid, hydroxyethylacrylic acid, itaconic acid, etc.

As examples of organic unsaturated sulfonic acid, mention may be made of 2-acrylamido-2-methyl-propanesulfonic acid, p-styrenesulfonic acid, sulfoethyl metharylate, allylsulfonic acid, methallyl-sulfonic acid, etc.

As salts of the unsaturated carboxylic acid and the organic unsaturated sulfonic acid, there may be used alkali metal salts or ammonium salts thereof which are easily soluble in water.

Further, unsaturated amides copolymerizable with these monomers may also be used in combination with said monomers.

The above unsaturated amides include acrylamide or methacrylamide.

Amount of these monomers used is 1%-10%, preferably 2%-5% for the total heat storage material. When it is less than 1%, viscosity is low and the effect of preventing the settling down of sodium sulfate anhydrous salt produced by phase changing is small. On the other hand, when the concentration is unnecessarily high, heat storage capacity decreases.

The polyfunctional monomers are used for crosslinking the polymers. Examples of the polyfunctional monomers, mention may be made of N,N'-methylenebisacrylamide, N,N'-methylenebismethacrylamide, N,N'-dimethylenebisacrylamide, N,N'-dimethylenebismethacrylamide, etc. Amount of the polyfunctional monomers is 0.01%-1%, preferably 0.05%-0.5%. When it is less than 0.01%, the crosslinking effect is small and when more than 1%, there cannot be obtained the effect corresponding to the addition amount.

As polymerization initiators, there may be used common radical polymerization initiators, for example, diacyl peroxides such a acetyl peroxide, lauroyl peroxide, benzoyl peroxide, etc.; hydroperoxides such as cumene peroxide, etc.; alkyl peroxides such as di-tert-butyl peroxide, etc.; ammonium or potassium peroxodisulfate, hydrogen peroxide, 2,2-azobisisobutyronitrile, etc. Of these initiators, preferred are redox type polymerization initiators because they have activity at a relatively low temperature.

The redox type polymerization initiators suitably used in this invention are those which are water soluble among the known initiators. Oxidizing agents therefor are ammonium or potassium peroxodisulfate, hydrogen peroxide, etc. and reducing agents are sodium thiosulfate, sodium thiosulfite, ferrous sulfate, etc.

The temperature for crosslinking polymerization is higher than the melting point of sodium sulfate decahydrate or eutetic salt thereof and usually 15-50°C.

The redox type polymerization initiators develop polymerization acitivity in a relatively short time after mixing the oxidizing agent and the reducing agent which constitute the initiator. If the initiators contact with oxygen in the air after development of the polymerization activity, they lose the activity. Therefore, it is necessary that after they have been mixed, they are immediately fed to a polymerization container so that they contact with air as little as possible.

The process of this invention can be practised in various manners. For example, the polymerization is carried out in a relatively large container and the produced heat storage material is divided into small portions and filled in containers which constitute the heat storage part of a heater. The large container for polymerization is previously flushed with nitrogen gas and the starting materials are mixed and polymerized therein.

In this invention, crosslinked polymers are not used as the starting materials, but monomers are used and thus the mixing operation is easy.

As another method for practice of this invention, the polymerization is carried out in a heat storage container of heaters and the like. The feature of this invention can be especially well exhibited according to this method.

In this invention, not the crosslinked polymers, but monomers are used as starting materials and hence the mixed materials before polymerization are liquid compositions of low viscosity. Therefore, the mixed materials can be easily poured in many containers of complicated shapes. By carrying out the polymerization in container, a heat storage material which is a viscous liquid or a jelly-like solid can be easily contained in a container of complicated shape.

Since crosslinked polymers are not used, mixing operation is carried out easily. When the mixed material is filled in a container and the polymerization is carried out therein, flushing with nitrogen may not necessarily be effected.

For pouring the liquid composition before polymerization into a container in which the heat storage material is to be contained, if a redox initiator is used as polymerization initiator, it is preferred to pour the composition with continuously blending the oxidizing agent and the reducing agent in the flow system of the composition. For example, there are following pouring methods: the oxidizing agent and the reducing agent are separately added to the liquid composition of sodium sulfate or an eutectic salt thereof, water and monomers in the course of pouring into a container; either one of the oxidizing agent or the reducing agent is dissolved in the liquid composition and the other is added to the composition in the course of being poured into the container; the composition is divided into two, in one of which is dissolved the oxidizing agent and in another of which is dissolved the reducing agent and these two compositions are allowed to collide with each other and mixed in the course of pouring into the container and are poured into the container. In order to attain sufficient mixing, an in-line mixer can be placed in the flow path of the liquid composition.

In order to prevent anhydrous sodium sulfate and other additives from settling down and separating in the container during the period before the polymerization reaction of the monomers proceeds to increase the viscosity after the mixed material had been poured into the container, it is preferable to previously add a thickening agent to increase the viscosity of aqueous medium. As the thickening agent used for this purpose, there may be used various known thickening agents such as, for example, inorganic materials, i.e., fumed silica, wet-ground silica, various clays, etc. and water soluble polymers such as sodium polyacrylate, etc. Amount of the thickening agent to be added is about 0.1-7% and this may be such that it can provide viscosity which can prevent the settling of anhydrous sodium sulfate during the short period before crosslinking reaction proceeds to increase viscosity.

It is common to add a supercooling inhibitor to a heat storage material.

In the process of this invention, the supercooling inhibitor may be previously added to the liquid composition before polymerization or it may be added after polymerization. When polymerization is carried out in the container in which the final heat storage material is to be contained, it is necessary to add the inhibitor to the liquid composition before polymerization.

Sodium tetraborate decahydrate is well known to be effective as a supercooling inhibitor. Addition amount of the inhibitor is about 2-5% of the total heat storage material and this amount is may be such that is more than the saturation solubility in the aqueous medium at the operation temperature. Since the pH range in which sodium tetraborate decahydrate is stably present in the aqueous medium is from neutral to basic, if it becomes acidic by the monomers or polymers, it is preferred to neutralize it with an alkali.

The following non-limiting examples further illustrate this invention.

Example 1

To 150 g of a solution (containing 10% by weight of sodium acrylate) prepared by neutralizing acrylic acid to a pH of 7.5 with an aqueous sodium hydroxide solution was added 150.8 g of water, followed by adding 0.75 g of N-N'-methylenebisacrylamide, 177.4 g of anhydrous sodium sulfate, 21.9 g of sodium chloride, 15 g of sodium tetraborate decahydrate and 25 g of powdered silica (Tokusil®-P manufactured by Tokuyama Soda Co., Ltd.) at 30°C with stirring, thereby to obtain a homogeneous mixture free from settling. This mixture was divided into two portions. To one of them was added 0.5 g of ammonium peroxidisulfate and to another portion was added 0.5 g of sodium thiosulfate pentahydrate. These two mixtures were separately passed through separate flow paths and in the course of their passing these two flows were mixed by allowing them to collide with each other and poured into a polyethylene bag of 40 mm x 600 mm. This bag was suspended in an atmosphere of 40°C and was examined after 1 hour to find that crosslinking polymerization proceeded to give a homogeneous jelly-like elastomeric polymer. 50 g of this polymer was introduced into a glass tube of 30 mm in diameter and 100 mm in length and subjected to a temperature history comprising repetition of the cycles of elevation and reduction of temperature between 40°C and 10°C. Phase change took place at about 28°C. This was stable even after subjected to the temperature history of 100 cycles and no phase separation occurred. Heat of fusion after the temperature history of 100 cycles was 37 cal/g.

Example 2

500 parts by weight of a mixture prepared in the same manner as in Example 1 was divided into two portions. To one of them was added 0.5 g of ammonium peroxodisulfate and to another was added 0.5 g of sodium sulfite. Each of the mixtures was stirred for 30 minutes and these two mixtures were separately passed through separate flow paths. In the course of thier passing, these two flows were mixed by allowing them to collide with each other and poured into a polyethylene bag of 40 mm x 600 mm. This bag was suspended in an atmosphere of 40°C to give a homogeneous jelly-like elastomeric crosslinked polymer in 10 minutes. The resulting polymer was subjected to the temperature history of 100 cycles in the same manner as in Example 1, but no phase separation occurred and the polymer had a fusion of heat of 36 cal/g.

Example 3

195.8 g of water was added to 100 g of a solution (containing 10% by weight of sodium acrylate) prepared by neutralizing acrylic acid to a pH of 7.5 with an aqueous sodium hydroxide solution. In this solution were dissolved 5 g of acrylamide, 0.75 g of N,N'-methylenebisacrylamide and 0.5 g of sodium sulfite at 30°C with stirring in the air. To the resulting solution were added 177.4 g of anhydrous sodium sulfate, 21.9 g of sodium chloride, 15 g of sodium tetraborate decahydrate and 25 g of powdered silica (Tokusil®-P manufactured by Tokuyama Soda Co., Ltd.) to obtain a homogeneous mixture free from settling. This mixture was divided into two portions. To one of them was added 0.5 g of ammonium peroxodisulfate and to another was added 0.5 g of sodium thiosulfate pentahydrate. The resulting two mixtures were separately passed through separate flow paths and in the course of their passing, these two flows were mixed by allowing them to collide with each other and poured into a polyethylene bag. This bag was kept in an atmosphere of 40°C. This was examined after about 10 minutes to find that there was produced a homogeneous elastimeric polymer. In the same manner as in Example 1 this polymer was subjected to the temperature history of 100 cycles, but no phase separation occurred. The polymer had a fusion of heat of 34 cal/g.

Example 4

30 g of a 10% sodium acrylate solution was taken in a 100 ml beaker and in this situation was dissolved 1.32 g of 2-acrylamide-2-methylpropanesulfonic acid, followed by adjusting the pH to 7.37 with sodium hydroxide and adding water to make up 61.6 g. In this solution were dissolved 0.15 g of N,N'-methylenebisacrylamide and 0.1 g of sodium sulfite, followed by adding 35.5 g of anhydrous sodium sulfate, 4.4. g of sodium chloride and 3 g of sodium tetraborate decahydrate at 30°C with stirring in the air to obtain a suspension. To this suspension were added 0.1 g of ammonium peroxodisulfate and 0.1 g of sodium thiosulfate pentahydrate, resulting in rapid polymerization after 15 seconds to yield a homogeneous jelly-like elastomeric polymer. In the same manner as in Example 1, this polymer was subjected to the temperature history of 100 cycles but no phase separatation occured. The polymer had a fusion of heat of 34 cal/g.

Example 5

To 150 g of a 10% sodium acrylate solution was added 113 g of water, followed by adding 0.75 g of N,N'-methylenebisacrylamide, 177.4 g of anhydrous sodium sulfate and 15 g of sodium tetraborate decahydrate . at 30°C with stirring to obtain a homogeneous mixture free from settling. To this mixture was added 0.5 g of sodium thiosulfate pentaphydrate. The resulting mixture was poured into a polyethylene bag of 40 mm x 600 mm. During the pouring, 5 g of a 10 wt% aqueous sodium persulfate solution was simultaneously poured into the bag. This bag was suspended in an atmosphere of 40°C and examined after 30 minutes to find that crosslinking polymerization proceeded to yield a homogeneous jelly-like elastomeric polymer. 50 g of this polymer was introduced into a glass tube of 30 mm in diameter and 100 mm in length and subjected to the same temperature history as in Example 1. A phase change occurred at about 32°C. The polymer was stable even after subjected to the temperature history of 100 cycles, showed no phase separation and had a fusion of heat of 44 cal/g.

Comparative Example 1

30.2 g of water was added to 30 g of a 10% sodium acrylate solution prepared in the same manner as in Example 1 and $N_2$ gas was blown thereinto. This solution was mixed with 35.5 g of anhydrous sodium sulfate, 4.4 g of sodium chloride and 3 g of sodium tetraborate decahydrate at 30°C with stirring. To the resulting solution were added 0.1 g of ammonium peroxodisulfate pentahydrate and 0.1 g of sodium thiosulfate pentahydrate in the presence of $N_2$ stream, followed by stirring. After about 3 minutes, the viscosity somewhat increased, but thereafter, no increase of the viscosity was seen even with continuation of stirring and when the stirring was discountinued, phase separation occurred. In the same manner as in Example 1, this was subjected to the temperature history of 100 cycles and fusion of heat was measured to obtain 19 cal/g.

This comparative example showed the results when no polyfunctional monomer which was crosslinking agent was used.

Comparative Example 2

57.2 g of water was poured into a 100 ml beaker and 0.2 g of N,N'-methylenebisacrylamide, 3.0 g of acrylamide and 0.1 g of sodium sulfite were added thereto at 30°C with stirring to dissolve them, thereby to obtain a clear solution. To this solution were added 35.5 g of anhydrous sodium sulfate, 4.4 g of sodium chloride and 3 g of sodium tetraborate decahydrate and then 0.1 g of ammonium peroxodisulfate and 0.1 g of sodium thiosulfate pentahydrate. After about 10 seconds, the mixture in the system became opaque and polymerization took place, but no elastomeric polymer was produced and there occurred separation between the polymer and the aqueous phase. In the same manner as in Example 1, the product was subjected to the temperature history of 100 cycles and the fusion of heat was measured to obtain 23 cal/g.

This comparative example showed the results when the crosslinked polymer was different from that of this invention.

According to the process of this invention, the mixture before polymerization is dealt with in the form of a solution of monomers and so is low in viscosity. Thus, there are the advantages that operations of dissolving and mixing the components and filling the mixture in the container are easy and no special device are required. Thereby, the producibility is markedly improved. Further, the polymerization products are water-swelling crosslinked polymers and reduction of heat-storing capacity caused by subjecting them to the cycles of melting and solidification can be inhibited and the products are excellent as heat storage materials in their long-term stability. The heat storage materials produced by the process of this invention are used in the heat storage parts of energy-saving type heating systems in combination with solar collectors or midnight power utilizing type heating elements.

Claims

1. A process for producing a heat storage material comprising a composition of a hydrate of sodium sulfate or its eutectic salt and a crosslinked polymer which comprises polymerizing a polyfunctional monomer and at least one monomer selected from the group consisting of an unsaturated carboxilic acid, an organic unsaturated sulfonic acid and a salt thereof in the presence of sodium sulfate or its eutectic salt, water and a polymerization initiator.

2. A process for producing a heat storage material according to claim 1 wherein the polymerization initiator is a redox type polymerization initiator.

3. A process for producing a heat storage material according to claim 1 wherein an saturated amide copolymerizable with the monomers is used in combination with the monomers.

4. A process for producing a heat storage material according to claim 1 wherein a thickening agent is added to the system.

5. A process for producing a heat storage material according to claim 1 wherein a supercooling inhibitor is added before or after the polymerization.

6. A process for producing a heat storage material according to claim 1 wherein the polymerization is carried out in a heat storing container of heaters.

7. A heater which contains the heat storage material produced by the process of claim 1.

8. A process for producing a heat storage material according to claim 1 wherein the eutectic salt comprises sodium sulfate and sodium chloride, potassium chloride, sodium nitrate, potassium nitrate, magnesium sulfate or ureas.

9. A process for producing a heat storage material according to claim 1 wherein the unsaturated carboxylic acid is acrylic acid, methacrylic acid, hydroxyethylacrylic acid or itaconic acid.

10. A process for producing a heat storage material according to claim 1 wherein the organic unsaturated sulfonic acid is 2-acrylamide-2-methyl-propanesulfonic acid, p-styrenesulfonic acid, sulfoethyl methacrylate, allylsulfonate or methallylsulfonic acid.

11. A process for producing a heat storage material according to claim 1 wherein the salt of unsaturated carboxylic acid or organic unsaturated sulfonic acid is an alkali metal salt or ammonium salt.

12. A process for producing a heat storage material according to claim 1 wherein the polyfunctional monomer is N,N'-methylenebisacrylamide, N,N'-methylenebismetharylamide, N,N'-dimethylenebisacrylamide or N,N'-dimethylenebismethacrylamide.

13. A process for producing a heat storage material according to claim 2 wherein an oxidizing agent in the redox type polymerization initiator is ammonium or potassium peroxodisulfate or hydrogen peroxide.

14. A process for producing a heat storage material wherein a reducing agent in the redox type polymerization initiator is sodium thiosulfate, sodium sulfite or ferrous sulfate.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 087 859 (ALLIED COLLOIDS) * Claims 1,6,14-16; page 7, lines 6-23; page 9, lines 9-11; page 11, lines 3-30 * | 1-14 | C 09 K 5/06 |
| | --- | | |
| A | EP-A-0 166 662 (CNRS) * Claims 1,4 * | 1,6,9 | |
| | --- | | |
| A | EP-A-0 011 411 (CALOR) * Claims 1,3,4; example 1 * | 1,8,9 | |
| | --- | | |
| A | EP-A-0 000 099 (CALOR) | | |
| | ----- | | |

|  | TECHNICAL FIELDS SEARCHED (Int. Cl.4) |
|---|---|
| | C 09 K |

The present search report has been drawn up for all claims

| Place of search | Date of completion of the search | Examiner |
|---|---|---|
| THE HAGUE | 08-05-1987 | NICOLAS H.J.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82